# EUROPÄISCHE PATENTSCHRIFT

(11) **EP 2 087 956 B1**
(45) Veröffentlichungstag und Bekanntmachung des Hinweises auf die Patenterteilung: **04.09.2013**
(21) Anmeldenummer: 09001478.8
(22) Anmeldetag: 04.02.2009
(51) Int. Cl.: B23B 1/00, B23B 5/10, B23B 11/00, B23C 3/04, B23Q 39/02

(54) **Verfahren und Bearbeitungsmaschine zur spanenden Bearbeitung komplexer Konturen von asymmetrischen Werkstücken**
Method and processing machine for tensioned processing of complex contours of asymmetric workpieces
Procédé et machine de traitement destinée au traitement tendu de contours complexes de pièces usinées asymétriques

(30) Priorität: 08.02.2008 DE 102008008269; 14.01.2009 DE 102009004964
(43) Veröffentlichungstag der Anmeldung: 12.08.2009
(73) Patentinhaber: SMS Meer GmbH, 41069 Mönchengladbach (DE)
(72) Erfinder: Esser, Karl-Josef, 41179 Mönchengladbach (DE); Plätzmüller, Edmund, 41751 Viersen (DE); Schmidt, Hans-Peter, 40489 Düsseldorf (DE); Zabel, Andreas, 40670 Meerbusch (DE); Derix, Rainer, 52525 Heinsberg (DE)
(74) Vertreter: Grosse, Wolf-Dietrich Rüdiger

(56) Entgegenhaltungen:
- EP-A- 0 882 548
- EP-A- 1 413 395
- WO-A-2005/080048
- DE-C1- 4 026 898

## Beschreibung

Die Erfindung betrifft ein Verfahren zur spanenden Bearbeitung komplexer Konturen von asymmetrischen Werkstücken, wie Pilgerwalzen, auf einer computergesteuerten Bearbeitungsmaschine, wobei des Werkstück durch Drehen und Fräsen auf einer Maschine bearbeitet wird, wobei für die rotationssymmetrischen Konturbereiche des Werkstücks eine Drehbearbeitung und für die asymmetrischen Konturbereiche des Werkstücks eine Fräsbearbeitung vorgenommen wird.

Durch die EP-A 2-0 882 548, die dem Oberbegriff von Anspruch 1 zugrunde liegt ist eine solche Bearbeitungsmaschine als CNC-Dreh- und Fräsbearbeitungszentrum bekannt geworden, insbesondere zur Bearbeitung großer rotationssymmetrischer Werkstücke. Auf einem von einem Längsschlitten getragenen Querschlitten ist eine Dreh- und Fräseinheit und auf einem parallel dazu vorgesehenen zweiten Querschlitten ist eine Fräseinheit angeordnet. Die beiden Einheiten können einzeln oder miteinander gekoppelt zum Einsatz kommen. Dieses Bearbeitungszentrum ist allerdings nicht zur kurzzeitigen Komplettbearbeitung von Werkstückkonturen mit rotationssymmetrischen und komplizierten asymmetrischen Bereichen geeignet, wie sie insbesondere bei Pilgerwalzen vorliegen.

Zum Unrunddrehen, wie insbesondere für die Herstellung von Pilgerwalzen, sind im praktischen Betrieb Warmpilgerwalzendrehmaschinen mit computernumerischer Steuerung im Einsatz. Die bei Pilgerwalzen vorliegende, eine weite Einlassöffnung mit einer erheblichen Verschiebung der Rotationsmasse aus der Drehachse der Walze einschließende exzentrische Form bringt beim Unrunddrehen sich ständig verändernde Span- und Freiwinkel mit sich, wobei durch die Spanwinkelveränderungen die Schnittkräfte erheblich variieren.

Die in der Praxis verwendeten Warmpilgerwalzendrehmaschinen, wie aus der DE - C1 - 40 26 898 bekannt, erfordern daher ein Maschinenkonzept mit fünf ge-steuerten Achsen, wobei in den Achsen hohe Beschleunigungskräfte der Massen- und Schnittkräfte auftreten. Um die Beschleunigungen, die bereits innerhalb der normalen Kontur oberhalb von 20 m/s² liegen und zur Reduzierung von Winkelfehlern durch Variation der Höhenlage des Drehstahls insbesondere zur Herstellung des Pligermauls radial zum Werkstück bzw. in X-Richtung noch deutlich größer sind, zu begrenzen, wird eine geringe Schnittgeschwindigkeit in Kauf genommen. Zudem sind hohe Antriebsleistungen und große Steifigkeiten der Maschine notwendig, damit die gewünschten Oberflächengüten und eine höhere Standzeit der Werkzeuge (Drehstahl) erreichbar sind.

Der Erfindung liegt daher die Aufgabe zugrunde, ein Verfahren der eingangs genannten Art zu schaffen, das eine allseitige Bearbeitung des Werkstücks ermöglicht, wobei trotz eines möglichst großen Fräserdurchmessers kleine Radiuskonturen bearbeitet werden können.

Diese Aufgabe wird erfindungsgemäß dadurch gelöst, dass ein an seinem Außenumfang mit Rundplatten bestückter Scheibenfräser und ein mit einer Rundplatte bestückter, um eine Schwenkachse verstellbarer Drehstahl zur jeweiligen Bearbeitung des Werkstücks mit dem Mittelpunkt der Rundplatten des Scheibenfräsers auf einer auf dem Mittelpunkt des Werkstücks liegenden Wirklinie radial (X-Achse) gegen das drehende Werkstück zugestellt und koaxial (Z-Achse) zum Werkstück verfahren wird, wobei die Rotationsachse des angetriebenen Scheibenfräsers rechtwinklig zur Wirklinie verläuft.

Der Erfindung liegt die Erkenntnis zugrunde, dass aufgrund des horizontal mit Rundplatten zum Einsatz kommenden Scheibenfräsers dieser nicht mehr nach oben und unten gefahren werden muß, so dass eine senkrechte Ausrichtung mit zur seitlichen Werkstückoberfläche unabdingbarer Y-Achse entfallen kann, weil kein Anstellwinkelproblem mehr auftritt. Denn aufgrund der horizontal liegenden Rundplatten erfährt der Spanwinkel keine Änderung und bleibt weitestgehend gleich. Das Drehen kann mit hohen und das Fräsen mit niedrigen Drehzahlen durchgeführt werden.

Es lassen sich komplexe Konturen herstellen, wobei gleiche Schnittgeschwindig-keiten, z.B. 200 m/min, des Werkzeugs und geringe Beschleunigungskräfte bei einfacher Auslegung der Maschine möglich sind. Hierzu weist ein radial gegen das Werkstück zustellbarer, auf einer Linearführung koaxial zum Werkstück verfahrbarer Werkzeugschlitten einer Bearbeitungsmaschine, den an seinem Außenumfang mit Rundplatten bestückten, angetriebenen Scheibenfräser auf, und auf einer Linearführung ist ein radial gegen das drehbare Werkstück zustellberer Werkzeugschlitten mit dem mit einer Rundplatte bestückten Drehstahl angeordnet. Sobald die Drehbearbeitung der bezogen auf den Mittenpunkt bzw. die Mittenachse des Werkstücks rotationssymmetrischen bzw. zylindrischen Konturbereiche beendet ist, wird der Werkzeugschlitten des Scheibenfräsers gegen das Werkstück angestellt, so dass dann die bezogen auf den Mittenpunkt bzw. die Mittenachse des Werkstücks asymmetrischen Konturbereiche gefräst werden. Es lässt sich damit ein Drehen und Fräsen auf einer lediglich noch 4-Achsen-Maschine als Dreh- und Fräsmaschine mit programmierbarer Erfassung der komplexen Werkstück- /Walzenausführungen bzw. -konturen erreichen. Die nur noch geringen Beschleunigungen in den Achsen erlauben berechenbare Kräfte in den Maschinenkomponenten und damit eine sichere sowie kostengünstige Auslegung. Hohe Beschleunigungssprünge werden durch die Fräsbearbeitung der nicht rotationssymmetrischen Konturbereiche vermieden.

Nach einem Vorschlag der Erfindung wird die Kontur des Werkstücks über in bestimmten Winkelschritten, z.B, 10°, veränderlichen Radien definiert. Hierbei ist von jeder Werkstückkontur eine Dokumentation und Datensicherung möglich. Es ist bevorzugt, dass der Mittelpunkt der Radien auf der Mitte des Werkstücks liegt.

Weitere Merkmale und Einzelheiten der Erfindung ergeben sich aus den Ansprüchen und aus der Beschreibung eines in den Zeichnungen schematisch mit einer Pilgerwalze als Werkstück dargestellten Ausführungsbeispiels der Erfindung. Es zeigen:
- Fig. 1: eine perspektivische Gesamtansicht einer herkömmlichen, aus der betrieblichen Praxis zum Stand der Technik zählenden Warmpilgerwalzendrehmaschine mit dazu erforderlichen, fünf gesteuerten Achsen;
- Fig. 2: in einer prespektivischen Teilansicht das erfindungsgemäße Konzept einer Dreh- und Fräsmaschine, die auf einer Linearführung einen Werkzeugschlitten mit einem Fräskopf und hier vertikaler Rotationsachse für einen mit Rundplatten versehenen Scheibenfräser sowie einen Werkzeugschlitten mit einem mit einer Rundplatte bestückten Drehstahl aufweist;
- Fig. 3: in einer Vorderansicht als Beispiel für ein eine komplexe Kontur aufweisendes Werkstück eine Pilgerwalze;
- Fig. 4: eine Pilgenrwalzengeometrie in einem Querschnitt der Fig. 3 mit auf Mitte des Werkstücks bzw. der Pilgerwalze zur Bearbeitung angestelltem Scheibenfräser;
- Fig. 5: eine Draufsicht der Fig. 4, die auch den Werkzeugschlitten mit dem Drehstahl (vgl. Fig. 2) erkennen lässt;
- Fig. 6: als Einzelheit in vereinfachter Darstellung als Teilansicht einen Arbeitspunkt einer Rundplatte eines Scheibenfräsers; und
- Fig. 7: eine Pilgerwalzengeometrie in einem Querschnitt mit Definition der Kontur über in Winkelschritten von 10° veränderlichen Radien.

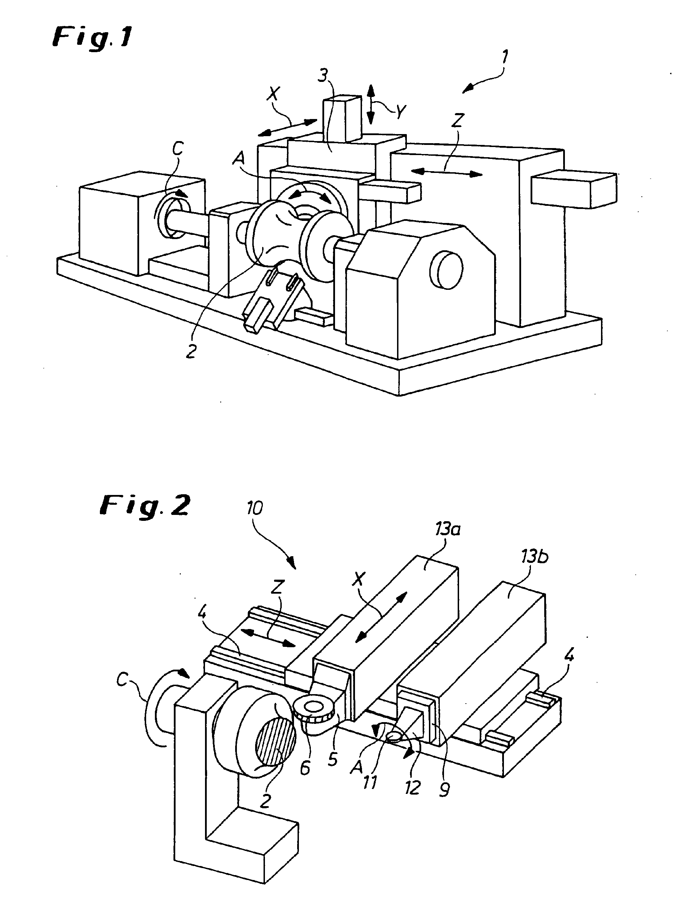

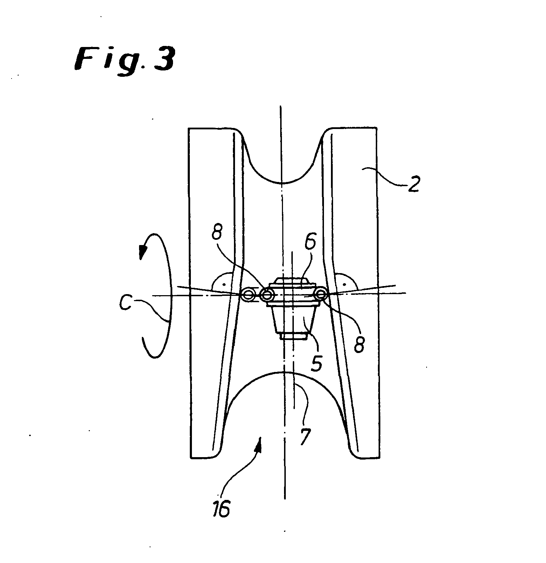

In Fig. 1 ist eine zum Stand der Technik zählende Drehmaschine 1 zum Herstellen eines eine komplexe asymmetrische Kontur aufweisenden Werkstücks, wie insbesondere eine Pilgerwalze 2 (vgl. auch Fig. 3), durch Drehbearbeitung dargestellt. Das Werkstück / die Pilgerwalze 2 ist um die Werkstückdrehachse C drehend eingespannt. Ein nicht zu erkennender Drehmeißel ist um eine Schwenkachse A verstellbar und wird am drehenden Werkstück 2 mit Hilfe eines Werkzeugschlittens 3 in Richtung der Werkzeug-Hauptantriebsachse Z entlang bewegt. Der Drehmeißel / das Werkzeug führt die Zustell- und Vorschubbewegung (X-Achse) aus und weist eine zur senkrechten Ausrichtung des Drehmeißels zur seitlichen Werkstückoberfläche erforderliche Y-Achse auf.

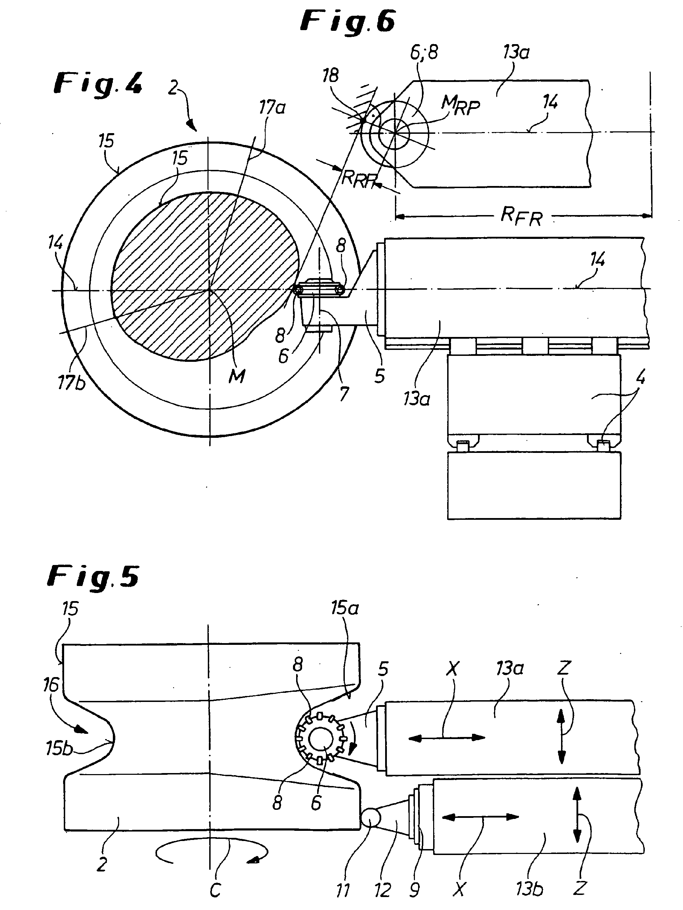

Die in Fig. 2 ausschnittsweise dargestellte Bearbeitungsmaschine 10 ist als Dreh- und Fräsmaschine ausgebildet. Dem um die Werkstückdrehachse C rotierenden Werkstück 2 sind hier auf einer Linearführung 4 zwei in Z-Richtung verfahrbare und in X-Richtung mit der Vorschubbewegung zustellbare Werkzeugschlitten 13 a bzw. 13 b zugeordnet. Der Werkzeugschlitten 13 a weist einen vom Werkzeugkopf 5 getragenen, um eine vertikale Rotationsachse 7 (vgl. die Fig. 3 und 4) angetriebenen Scheibenfräser 6 auf, der an seinem Außenumfang mit gleichmäßig verteilt angeordneten Rundplatten 8 versehen ist. Der Werkzeugschlitten 13 b besitzt zur Drehbearbeitung des Werkstücks bzw. der Pilgerwalze 2 einen vom Werkzeugkopf 9 getragenen Drehstahl 12 mit einer Rundplatte 11.

Zur Bearbeitung des Werkstückrohlings zu dem fertigen Werkstück bzw. zur Pilgerwalze 2 werden der Scheibenfräser 6 - wie für diesen in Fig. 4 und 6 dargestellt - bzw. der Drehstahl 12 mit dem Mittelpunkt der Rundplatten 8 bzw. der Rundplatte 11 auf einer auf dem Mittelpunkt M des Werkstücks 2 liegenden Wirklinie 14 horizontal an - bzw. zugestellt, wobei die Rotationsachse 7 des angetriebenen Scheibenfräsers 6 rechtwinklig zur Wirklinie 14 verläuft. Der horizontal angestellte bzw. stehende Drehstahl 12 mit der Rundplatte 11 ist um die Schwenkachse A (vgl. Fig. 2) verstellbar, so dass bei einer Schrägbearbeitung ein seitliches Schwenken möglich ist. Wie in den Fig. 3 und 6 angedeutet wird, lassen sich aufgrund der horizontal angestellten bzw. liegenden Rundplatten 8, 11 konstante Winkelverhältnisse erreichen, insbesondere erfährt der Spanwinkel keine Veränderung und bleibt weitestgehend gleich.

Die durch Drehen zu bearbeitenden, rotationssymmetrischen Konturbereiche 15 sind in den Figuren 4 und 5 mit dick durchgezogenen Linien verdeutlicht. Das sind bei einer Pilgerwalze 2 die Außenmantelflächen mit Übergang 15 a zum Pilgermaul 16 und dessen zylindrischer Konturabschnitt 15 b, d. h. im Wesentlichen die Glättzone bis etwa übergehend in die Verformungszone und die Auslaufzone wie in Fig. 4 durch die Begrenzungslinien 17 a, 17 b angedeutet.

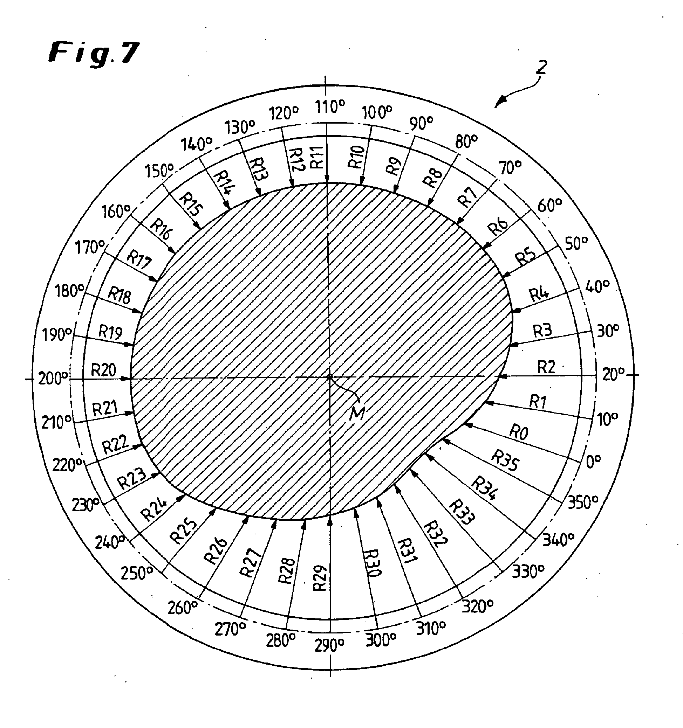

Nach Fig. 7 wird die Kontur des Werkstücks 2 über in Winkelschritten von 10° veränderlichen Radien definiert, wobei die Bearbeitung programmierbar ist über den Radius des Fräsers RFR bis zur Mitte der Rundplatten MRP und dem Radius der Rundplatten RRP, wie in Fig. 6 schematisch eingetragen, der sich weiterhin ein Arbeitspunkt 18 einer Rundplatte 8 des Scheibenfräsers 6 an der asymmetrischen bzw. nicht rotationssymmetrischen Kontur des Werkstücks 2 in der Bearbeitungssituation der Fig. 4 entnehmen lässt.

Bezugszeichenliste
- 1: Drehmaschine
- 2: Werkstück / Pilgerwalze
- 3: Werkzeugschlitten
- 4: Linearführung
- 5: Werkzeugkopf (Fräser)
- 6: Scheibenfräser
- 7: Rotationsachse (des Scheibenfräsers)
- 8: Rundplatte
- 9: Werkzeugkopf (des Drehstahls)
- 10: Bearbeitungsmaschine / Dreh- und Fräsmaschine
- 11: Rundplatte (des Drehstahls)
- 12: Drehstahl
- 13 a, b: Werkzeugschlitten
- 14: Wirklinie
- 15: rotationssymmetrischer Konturbereich
- 15 a: Übergangskontur
- 15 b: zylindrischer Konturabschnitt
- 16: Pilgermaul
- 17 a, b: Begrenzungslinien
- 18: Arbeitspunkt (einer Rundplatte)

- RFR: Radius des Fräsers
- MRP: Mitte der Fräser-Rundplatten
- RRP: Radius der Rundplatten

- A: Schwenkachse im Werkzeug
- C: Werkstückdrehachse
- X: radiale Werkzeug - Zustellachse / Vorschubbewegung

- Y: vertikale Werkzeug-Ausrichtachse
- Z: Werkzeug-Hauptantriebsachse
- M: Mittelpunkt (bzw. Mitte) des Werkstücks

## Patentansprüche

1. Verfahren zur spanenden Bearbeitung komplexer Konturen von asymmetrischen Werkstücken, wie Pilgerwalzen, auf einer computergesteuerten Bearbeitungsmaschine, wobei das Werkstück (2) durch Drehen und Fräsen auf einer Maschine bearbeitet wird, wobei für die rotationssymmetrischen Konturbereiche (15) des Werkstücks (2) eine Drehbearbeitung und für die asymmetrischen Konturbereiche des Werkstücks (2) eine Fräsbearbeitung vorgenommen wird,
**dadurch gekennzeichnet,**
**daß** ein an seinem Außenumfang mit Rundplatten (8) bestückter Scheibenfräser (6) und ein mit einer Rundplatte (11) bestückter, um eine Schwenkachse (A) verstellbarer Drehstahl (12) zur Jeweiligen Bearbeitung des Werkstücks (2) mit dem Mittelpunkt der Rundplatten (8) des Scheibenfräsers (6) beziehungsweise der Rundplatte (11) des Drehstahls (12) auf einer auf dem Mittelpunkt (M) des Werkstücks (2) liegenden Wlrkllnle (14) radial (X-Achse) gegen das drehende Werkstück zugestellt und koaxial (Z-Achse) zum Werkstück verfahren wird, wobei die Rotationsachse (7) des angetriebenen Scheibenfräsers (6) rechtwinklig zur Wirklinie (14) verläuft.

2. Verfahren nach Anspruch 1,
**dadurch gekennzeichnet,**
**dass** die Kontur des Werkstücks (2) über in bestimmten Winkelschritten, z.B. 10°, veränderlichen Radien (RO bis R35) definiert wird.

3. Verfahren nach Anspruch 2,
**dadurch gekennzeichnet,**
**dass** der Mittelpunkt der Radien (RO bis R35) auf der Mitte (M) des Werkstücks (2) liegt.

## Claims

1. A method for machining complex contours of asymmetric work pieces such as pilger rolls on a computer-controlled processing machine, wherein the work piece (2) is processed by means of turning and milling on a machine, and wherein a turning operation is carried out for the rotationally symmetrical contour regions (15) of the work piece (2) and a milling operation is carried out for the asymmetric contour regions of the work piece (2),
**characterized in**
**that** a side milling cutter (6) that is equipped with round inserts (8) on its outer circumference and a turning tool (12) that is equipped with a round insert (11) and adjustable about a pivoting axis (A) are respectively adjusted radially (X-axis) toward the rotating work piece on a line of action (14) that lies in the center (M) of the work piece (2) with the center of the round inserts (8) of the side milling cutter (6) and the center of the round insert (11) of the turning tool (12), as well as displaced coaxially (Z-axis) to the work piece, in order to respectively process the work piece (2), wherein the rotational axis (7) of the driven side milling cutter (6) extends perpendicular to the line of action (14).

2. The method according to Claim 1, **characterized in that** the contour of the work piece (2) is defined by radii (RO to R35) that can be varied by certain angular increments, e.g., 10°.

3. The method according to Claim 2, **characterized in that** the center of the radii (RO to R35) lies in the center (M) of the work piece (2).

## Revendications

1. Procédé pour l'usinage par enlèvement de copeaux de contours complexes de pièces asymétriques, comme les cylindres de laminoir à pas de pèlerin, sur une machine d'usinage pilotée par ordinateur, pour lequel la pièce (2) est usinée sur une machine par tournage et fraisage, pour lequel on pratique un usinage au tour pour les zones de contour (15) symétriques en rotation de la pièce (2) et un usinage à la fraise pour les zones de contour asymétriques de la pièce (2)
**caractérisé en ce qu'**
une fraise-disque (6) équipée de plaquettes rondes (8) sur sa périphérie extérieure et un outil de tour (12) équipé d'une plaquette ronde (11), réglable autour d'un axe de pivotement (A) sont approchés pour l'usinage respectif de la pièce (2) avec le centre des plaquettes rondes (8) de la fraise-disque (6) ou de la plaquette ronde (11) de l'outil de tour (12) sur une ligne active (14) se situant au centre (M) de la pièce (2), radialement (axe X) contre la pièce en rotation et déplacés coaxialement (axe Z) vers la pièce, l'axe de rotation (7) de la fraise-disque (6) entraînée passant perpendiculairement à la ligne active (14).

2. Procédé selon la revendication 1 **caractérisé en ce que** le contour de la pièce (2) est défini par des rayons (RO à R35) variables par certaines progressions angulaires, par ex. 10°.

3. Procédé selon la revendication 2 **caractérisé en ce que** le centre des rayons (RO à R35) se situe au centre (M) de la pièce (2).
